**Europäisches Patentamt**

**European Patent Office**

**Office européen des brevets**

(19)

(11) Veröffentlichungsnummer: **0 195 200**
**A2**

(12) **EUROPÄISCHE PATENTANMELDUNG**

(21) Anmeldenummer: **86101012.2**

(22) Anmeldetag: **25.01.86**

(51) Int. Cl.⁴: **C 07 C 29/15**

(30) Priorität: **20.03.85 DE 3510096**

(43) Veröffentlichungstag der Anmeldung:
**24.09.86 Patentblatt 86/39**

(84) Benannte Vertragsstaaten:
**BE DE FR GB IT SE**

(71) Anmelder: **Uhde GmbH**
**Friedrich-Uhde-Strasse 15 Postfach 262**
**D-4600 Dortmund 1(DE)**

(72) Erfinder: **Ilgner, Hartmut, Dipl.-Ing.**
**Am Siepenhohl 14**
**D-4600 Dortmund 14(DE)**

(72) Erfinder: **Hillebrand, Wolfgang, Dr.Dipl.-Chem.**
**Westendorfstrasse 5**
**D-4600 Dortmund 30(DE)**

(72) Erfinder: **Blumenfeld, Michael, Dipl.-Ing.**
**Wenkerstrasse 18**
**D-4600 Dortmund(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) **Verfahren zur Aufbereitung eines Restgases aus einer Niederdruckmethanolsynthese.**

(57) Bei einem Verfahren zur Aufbereitung eines Restgases (Purgegases) aus einer Niederdruckmethanolsynthese, insbesondere zur Erhöhung des Wasserstoff-Anteiles im Synthesegas, mit einem Synthesegas aus einer Vergasung kohlenstoffhaltiger Feststoffe, wobei das Restgas (Purgegas) nach der Methanolsynthese einer katalytischen Spaltung unterworfen wird, soll ein Verfahren angegeben werden, welches energetisch günstiger ist und mit dem insbesondere die Synthesegasverluste möglichst gering gehalten werden und das Methan in hohem Maße als Synthesegas genutzt werden kann.

Dies wird dadurch erreicht, daß das Gas nach der katalytischen Spaltung zunächst einer CO-Konverteirung unterworfen und anschließend das Konvertgas in Wasserstoff und Inerte insebesondere mittels einer Druckwechseladsorptionsanlage getrennt wird.

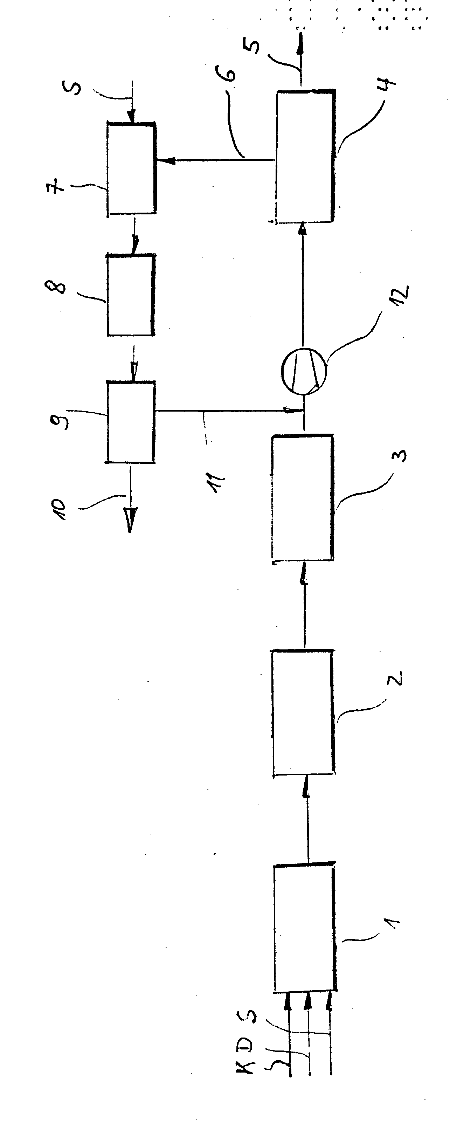

Hierzu ist die einzige Figur zu veröffentlichen.

EP 0 195 200 A2

Die Erfindung richtet sich auf ein Verfahren zur Aufbereitung eines Restgases (Purgegases) aus einer Niederdruckmethanolsynthese, insbesondere zur Erhöhung des Wasserstoffanteiles im Synthesegas, mit einem Synthesegas aus einer Vergasung kohlenstoffhaltiger Feststoffe, wobei das Restgas (Purgegas) aus der Methanolsynthese einer katalytischen Spaltung unterworfen wird.

Aus der DE-PS 24 45 884 ist es bekannt, daß das Restgas mit Wasserdampf katalytisch bei einem Druck von 10 bis 30 bar und einer Temperatur von 700 bis 850°C zu Wasserstoff und Kohlenoxyden gespalten und das Spaltgas gekühlt und in das gereinigte Methanolsynthesegas vor dem Verdichten auf Synthesedruck zurückgeführt wird, wobei ein Teil des Restgases zur Erzeugung der für die Spaltung notwendigen Wärme verfeuert wird.

Ein besonderer Nachteil bei diesem bekannten Verfahren besteht darin, daß das für die Verfeuerung notwendige Unterfeuerungsgas nur einen Teil der nicht spaltbaren Inerte $N_2$ und Ar mit ausschleust, wodurch sich im Synthesegas der Gehalt der Inerte erhöht. Dies führt in den Methanolsynthese zu einer Steigerung der Restgasmenge!

- 2 -

0195200

Ein weiterer Nachteil besteht darin, daß bei diesem bekannten Verfahren zur Erreichung eines niedrigen Methanrestgehaltes der Spaltdruck begrenzt sein muß, so daß die Kompremierung des Spaltgases auf Synthesedruck energetisch nachteilig ist.

Aufgabe der Erfindung ist es daher insbesondere, ein Verfahren anzugeben, welches energetisch günstiger ist und mit dem insbesondere die Synthesegasverluste möglichst gering gehalten werden und das Methan in hohem Maße zur Erzeugung von Synthesegas genutzt werden kann.

Bei einem Verfahren der eingangs bezeichneten Art wird diese Aufgabe gemäß der Erfindung dadurch gelöst, daß das Restgas nach der katalytischen Spaltung zunächst einer CO-Konvertierung unterworfen und anschließend das Konvertgas in Wasserstoff und Inerte, insbesondere mittels einer Druckwechseladsorptionsanlage getrennt wird.

Mit der Erfindung wird erreicht, daß eine Purgegas-Umwandlung in einen hohen Anteil Wasserstoff erzielt wird, während die nicht nutzbaren Gasbestandteile, wie beispielsweise $N_2$, Ar $CO_2$ in konzentrierter Form ausgeschleust werden können, womit sich der Inert-Anteil im Synthesegas nachhaltig senkt, da diese nicht, wie bei dem bekannten Verfahren, im Kreislauf geführt werden.

Ein Verfahren zur Gewinnung von Wasserstoff, Methan und Edelgasen ist aus der DD-PS 84 629 bekannt, wobei die genannten Gasbestandteile dort einer weiteren nachfolgenden Verarbeitung zugeführt werden.

Demgegenüber sieht in Ausgestaltung die Erfindung vor, daß der Wasserstoff aus der Abtrennung dem Prozeß vor der Methanolsynthese wieder zugeführt wird. Damit wird unter anderem auch erreicht, daß weniger CO im Rohgas der Kohlevergasung konvertiert werden muß und dadurch auch die nachfolgende $CO_2$-Wäsche entlastet wird. Dabei besteht ein weiterer Vorteil der Erfindung darin, daß bei Gasen mit hohem Methan- und Wasserstoffanteil, wie sie beispielsweise bei der Vergasung von Holz, Torf od. dgl. bei höheren Drücken gebildet werden, auf die Rohgaskonvertierung vollständig verzichtet werden kann.

Nach der Erfindung ist auch vorgesehen, daß der für die Vergasung eingesetzte Sauerstoff einen Reinheitsgrad von kleiner gleich 99 %, insbesondere von 90 bis 95 %, aufweist. Erst mit der Erfindung wird der Einsatz eines derartigen Sauerstoffes möglich, was die Wirtschaftlichkeit des Verfahrens in hohem Maße steigert.

Um eine weitere Verbesserung der Verfahrensweise zu erreichen, sieht die Erfindung auch vor, daß der anfallende Stickstoff für die Bespannung von Schleusensystemen im Gesamtprozeß eingesetzt wird, was wiederum zu einer Steigerung der Wirtschaftlichkeit führt. Bei dem bekannten Verfahren wird diesem Problem keine Aufmerksamkeit geschenkt, es hat sich aber gezeigt, daß dies besonders vorteilhaft ist.

Die Erfindung ist nachstehend anhand einiger Beispiele sowie anhand einer dazugehörigen Zeichnung näher erläutert. Diese zeigt in der einzigen Figur ein Flußdiagramm.

Kohle (K), Dampf (D) und Sauerstoff (S) werden der Kohlevergasung 1 zugeführt, was durch entsprechend beschriftete Pfeile dargestellt ist. Nach der Vergasung wird das Rohgas einer Konvertierung 2 zugeführt, einer $CO/H_2S$-Wäsche 3 und schließlich über einen Verdichter 12 der Methanolsynthese 4.

Über den mit 5 bezeichneten Prozeßweg verläßt das Methanol das System. Der Prozeßweg des Rest- bzw. Purgegases ist mit 6 bezeichnet. Das Restgas wird zunächst einer Restgasspaltung 7 nachfolgend einer Restgaskonvertierung 8 und schließlich einer Druckwechseladsorption DWA 9 zugeführt.

Über den Prozeßweg 10 verlassen die Inerte das System, während der Wasserstoff über den Prozeßweg 11 dem Hauptgasstrom vor der Methanolsynthese 4, wie dargestellt, wieder zugeführt wird.

Ein Beispiel der Verfahrensführung ist nachfolgend wiedergegeben:

Trockenbraunkohle ($TBK_{12}$) wird bei 20 bar mit Wasserdampf und Sauerstoff in der Wirbelschicht vergast. Es entsteht nach Abkühlung, bei der ein Teil der fühlbaren Wärme zur Sättigung mit Wasserdampf genutzt wird, eine Rohgasmenge, trocken, von 1.405 $Nm^3$/t $TBK_{12}$ und folgender Zusammensetzung:

|  | Vol. % |
|---|---|
| $CO_2$ | 16,8 |
| CO | 45,1 |
| $H_2$ | 33,5 |
| $CH_4$ | 3,9 |
| $N_2$ + Ar | 0,5 |
| $H_2S$ + COS | 0,2 |

Etwa 75 % des Rohgases wird über die CO-Konvertierung geleitet und dann mit dem restlichen Gas vereinigt. Nach Zwischenkompression von 16 auf 37 bar wird in einer Gasreinigung $H_2S$ vollständig und $CO_2$ bis auf etwas 5 Vol. % Restgehalt ausgewaschen. Das Gas 1223 $Nm^3$/t $TBK_{12}$ hat dann folgende Zusammensetzung:

|        | Vol. % |
|--------|--------|
| $CO_2$ | 5,6    |
| CO     | 27,8   |
| $H_2$  | 61,9   |
| $CH_4$ | 4,2    |
| $N_2$ + Ar | 0,5 |

Dem Gas werden erfindungsgemäß 128 $Nm^3$ reiner Wasserstoff aus der Purgegasaufbereitung zugefügt, so daß 1351 $Nm^3$ Methanolsynthesegas folgender Zusammensetzung entstehen:

|        | Vol. % |
|--------|--------|
| $CO_2$ | 5,0    |
| CO     | 25,2   |
| $H_2$  | 65,5   |
| $CH_4$ | 3,8    |
| $N_2$ + Ar | 0,5 |

Dieses Gas wird von 35 auf 101 bar verdichtet und in der Niederdruckmethanolsynthese zu 550 kg Methanol umgesetzt. Aus dem Kreislaufgas werden 102 $Nm^3$ Purgegas abgezogen, mit der Zusammensetzung:

|        | Vol. % |
|--------|--------|
| $CO_2$ | 6,3    |
| $CO$   | 3,4    |
| $H_2$  | 42,3   |
| $CH_4$ | 42,6   |
| $N_2$ + Ar | 5,4 |

Dieses Purgegas wird unter Zugabe von 32 $Nm^3$ Sauerstoff und 141 $Nm^3$ Dampf bei 40 bar und 950 $^{o}$C katalytisch autotherm gespalten und anschließend durch eine Hochtemperaturkonvertierung geleitet. Die aus der Konvertierung austretenden 201 $Nm^3$ Gas werden gekühlt und der DWA-Anlage zugeleitet.

|        | Vol. % |
|--------|--------|
| $CO_2$ | 21,3   |
| $CO$   | 4,3    |
| $H_2$  | 71,0   |
| $CH_4$ | 0,7    |
| $N_2$ + Ar | 2,7 |

In der DWA wird mit einem Wirkungsgrad von 89 % bei 37 bar der Wasserstoff (128 $Nm^3$) abgetrennt; das Restgas (74 $Nm^3$/h) verläßt nahezu drucklos die DWA und kann unterfeuert werden. Es hat folgende Zusammensetzung:

|  | Vol. % |
|---|---|
| $CO_2$ | 58,0 |
| CO | 11,6 |
| $H_2$ | 21,2 |
| $CH_4$ | 1,9 |
| $N_2 + Ar$ | 7,3 |

Durch die Purgegasaufbereitung nach obigem Beispiel kann die Anlagenkapazität gegenüber einer Anlage ohne Purgegasaufbereitung bei gleicher Methanolproduktion wie folgt verkleinert werden.

| Vergasung (1) | ca. 12 % |
|---|---|
| CO-Konvertierung (Rohgas) (2) | ca. 33 % |
| Zwischenkompression (3) | ca. 16 % |
| $CO_2$-Wäsche (4) | ca. 20 % |
| Sauerstoffverbrauch | ca. 5 % |

Natürlich ist das beschriebene Beispiel noch in vielfacher Hinsicht abzuändern ohne den Grundgedanken der Erfindung zu verlassen.

Patentansprüche:

1. Verfahren zur Aufbereitung eines Restgases (Purgegases) aus einer Niederdruckmethanolsynthese, insbesondere zur Erhöhung des Wasserstoff-Anteiles im Synthesegas, mit einem Synthesegas aus einer Vergasung kohlenstoffhaltiger Feststoffe, wobei das Restgas (Purgegas) aus der Methanolsynthese einer katalytischen Spaltung unterworfen wird, dadurch gekennzeichnet, daß das Gas nach der katalytischen Spaltung zunächst einer CO-Konvertierung unterworfen und anschließend das Konvertgas in Wasserstoff und Inerte insbesondere mittels einer Druckwechseladsorbtionsanlage getrennt wird.

2. Verfahren nach Anspruch 1, dadurch gekennzeichnet, daß die katalytische Spaltung mittels Sauerstoff durchgeführt wird.

3. Verfahren nach Anspruch 1, dadurch gekennzeichnet, daß der Wasserstoff aus der Abtrennung dem Prozeß wieder vor der Methanolsynthese zugeführt wird.

4. Verfahren nach Anspruch 1 oder 2 zum Einsatz bei Vergasungsverfahren von kohlenstoffhaltigen Feststoffen unter Druck,

0195200

dadurch gekennzeichnet,

daß der für die Vergasung eingesetzte Sauerstoff einen Reinheitsgrad von kleiner gleich 99 %, insbesondere von 90 bis 95 %, aufweist.


5. Verfahren nach Anspruch 3, dadurch gekennzeichnet, daß der anfallende Stickstoff für die Bespannung von Schleusensystemen im Gesamtprozeß eingesetzt wird.

K D S

1  2  3  12  4  5  6  7  S  8  9  10  11

1/1   0195200